# EUROPÄISCHE PATENTSCHRIFT

(11) **EP 1 905 789 B1**
(45) Veröffentlichungstag und Bekanntmachung des Hinweises auf die Patenterteilung: **29.12.2010**
(21) Anmeldenummer: 07018084.9
(22) Anmeldetag: 14.09.2007
(51) Int. Cl.: C08G 18/08, C08G 18/32, C08G 18/38, C08G 18/44, C08G 18/60, C08G 18/65, C08G 18/73, C09D 175/12

(54) **Wässrige Beschichtungsmittel auf Basis von Polyurethan-Dispersionen**
Aqueous coating agent based on polyurethane dispersions
Agent de revêtement aqueux à base de dispersions de polyuréthanne

(30) Priorität: 29.09.2006 DE 102006046650
(43) Veröffentlichungstag der Anmeldung: 02.04.2008
(73) Patentinhaber: Bayer MaterialScience AG, 51368 Leverkusen (DE)
(72) Erfinder: Münzmay, Thomas, Dr., 41539 Dormagen (DE); Blum, Harald, Dr., 51375 Leverkusen (DE); Klippert, Uwe, 51399 Burscheid (DE); Pohl, Torsten, Dr., 15216 Mt. Lebanon PA (US); Rische, Thorsten, Dr., 59423 Unna (DE)

(56) Entgegenhaltungen:
- GB-A- 2 235 927
- US-A- 3 786 031
- US-A- 4 791 230
- US-A1- 2002 068 789

## Beschreibung

Die Erfindung betrifft wasserverdünnbare, hydroxyfunktionelle Polyurethane mit Amid-struktureinheiten, ein Verfahren zu deren Herstellung, daraus hergestellte wässrige Beschichtungsmittel und deren Verwendung zur Lackierung von Substraten.

Seit Jahren gehen die Bemühungen zur Gewichtseinsparung im Automobilsektor einher mit vermehrtem Kunststoffeinsatz, auch im Innenbereich. Aufgrund ästhetischer und technischer Anforderungen werden Kunststoffteile im Automobil üblicherweise lackiert, um den Kunststoff vor äußeren Einflüssen, wie Sonnenlicht, chemischer, thermischer und mechanischer Beanspruchung zu schützen, um bestimmte Farbtöne und Farbeffekte zu erzielen, um Fehlstellen der Kunststoffoberfläche zu überdecken oder um der Kunststoffoberfläche einen angenehmen Griff (Haptik) zu verleihen. Zur Verbesserung der haptischen Eigenschaften von Kunststoffteilen im Automobilinnenraum werden in den letzten Jahren vermehrt sogenannte Softfeel-Lacke eingesetzt. "Softfeel-Effekt" im Sinne der vorliegenden Erfindung bezeichnet ein besonderes Griffempfinden (Haptik) der lackierten Oberfläche. Diese Haptik lässt sich mit Begriffen wie samtig, weich, gummiartig oder warm umschreiben, während sich z.B. die Oberfläche einer lackierten Auto-Karosse oder auch eine unlackierte oder mit einem üblichen Klar- oder Decklack beschichtete Kunststoff-Platte oder Plexiglas kalt und glatt anfühlt.

Wässrige Softfeel-Lacke auf Basis der Polyurethanchemie werden beispielhaft in der EP-A 0 669 352 offenbart. Diese Lacke ergeben neben einem ausgezeichneten Softfeel-Effekt auch Beschichtungen mit guter Beständigkeit und Schutzwirkung für das Kunststoffsubstrat.

Inzwischen sind die Anforderungen an Softfeel-Lacke für den Automobilinnenbereich, insbesondere hinsichtlich der Beständigkeit gegen Hautschutz- und Hautpflegecremes (z.B. Sonnencreme oder Sonnenmilch) derart gestiegen, dass diese Anforderungen mit den Lacken des Standes der Technik nicht oder nur mit Abstrichen beim Softfeel-Effekt zu erfüllen sind.

Es besteht weiter der Bedarf nach wässrigen Beschichtungsmitteln, die gute Beständigkeitseigenschaften, insbesondere gegen Hautschutz- und Hautpflegecremes sowie gleichzeitig einen ausgeprägten Softfeel-Effekt des Lackes aufweisen.

Überraschend wurde nun gefunden, dass wasserverdünnbare, hydroxyfunktionelle Polyurethane enthaltend Amid-Struktureinheiten zur Herstellung von Lacken mit ausgezeichneter Beständigkeit z.B. gegen Hautschutz- und Hautpflegecremes wie Sonnencreme oder Sonnenmilch und gleichzeitig einem hervorragenden Softfeel-Effekt geeignet sind.

In der US-A 5,780,559 werden endständige Amidgruppen-aufweisende, filmbildende Polyurethane offenbart, die mit Melaminharzen vernetzbar sind. Die Beschichtungen weisen eine hohe Säurebeständigkeit und hohe Härte auf. Die dort offenbarten Polyurethane eignenen sich jedoch nicht zur Verwendung in wässrigen Systemen. Darüber hinaus, sind die beschriebenen filmbildenden Polymere nicht für die Anwendung im Automobilinnenbereich geeignet, da die für diese Vernetzung notwendigen Temperaturen bei den im Automobilinnenbereich üblicherweise eingesetzten Kunststoffmaterialien nicht anwendbar sind.

Aus der US-A 2002/0068789 sind wässrige Dispersionen Amidgruppen-haltiger Polyurethane bekannt, die jedoch ebenfalls nicht die erfindungsgemäßen Strukturen aufweisen. Diese werden mit Vernetzungsmitteln, welche reaktiv gegenüber Amidgruppen sind, umgesetzt. Es werden thermisch härtbare Einkomponenten-Systeme erhalten, die insbesondere im Automobilsektor als OEM-Beschichtungen verwendet werden.

Aufgabe der vorliegenden Erfindung bestand somit in der Bereitstellung einer geeigneten Polyurethankomponente, die in Verbindung mit Isocyanat-Vemetzem Beschichtungsmittel ergibt, die über einen Softfeel-Effekt verfügen und gleichzeitig eine besonders gute Beständigkeit gegenüber Hautschutz- und Hautpflegecremes, insbesondere Sonnenschutzcremes, aufweisen.

Die Aufgabe wird durch die erfindungsgemäßen wasserverdünnbaren Polyurethane gelöst.

Gegenstand der vorliegenden Erfindung sind wasserverdünnbare, hydroxyfunktionelle Polyurethane enthaltend Struktureinheiten gemäß Formel (I) 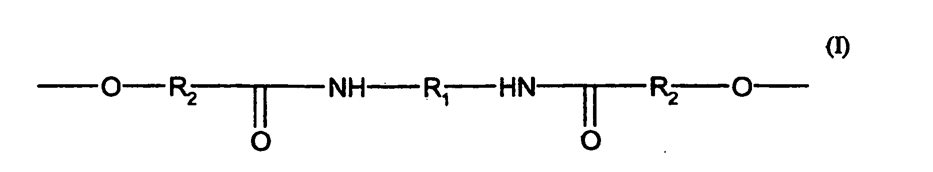 in welcher
- R1: ein aliphatischer oder cycloaliphatischer Rest mit 2 bis 18 Kohlenstoff-Atomen und
- R2: ein aliphatischer Rest mit 3 bis 5 Kohlenstoff-Atomen ist.

Die erfindungsgemäßen Polyurethane weisen einen Amidgruppen-Gehalt, berechnet als (CO)NH, von 2,0 bis 20 Gew.-%, bevorzugt 2,0 bis 15 Gew.-% besonders bevorzugt 3,0 bis 10 Gew.-/ auf.

Bevorzugt sind wasserverdünnbare, hydroxyfunktionelle Polyurethane, die als Aufbaukomponenten
A1) 25 - 80 Gew.-%, bevorzugt 30 - 60 Gew.-% mindestens eines Amidgruppen-haltigen Polyols des zahlenmittleren Molekulargewichts Mn von 314 bis 5000 Da,
A2) 0 - 60 Gew.-%, bevorzugt 10 - 50 Gew.-% mindestens eines Polyols ausgewählt aus der Gruppe der Polyester, Polycarbonate oder Polyether des zahlenmittleren Molekulargewichts Mn von 400 bis 6000 Da,
A3) 0 - 20 Gew.-%, bevorzugt 1 - 15 Gew.-% mindestens eines niedermolekularen Polyols mit mindestens zwei Hydroxylgruppen des zahlenmittleren Molekulargewichts 62 bis 400 Da,
A4) 2 - 10 Gew.-%, bevorzugt 3 - 8 Gew.-% mindestens einer Verbindung, die mindestens zwei gegenüber Isocyanatgruppen reaktive Gruppen und mindestens eine zur Anionenbildung befähigte Gruppe aufweist und
A5) 5 - 50 Gew.-%, bevorzugt 8 - 30 Gew.-% Polyisocyanate
enthalten, wobei die Summe der Komponenten A1) bis A5) 100 % ergibt.

Als Amidgruppen-haltige Komponente A1) geeignete Polyole sind beispielsweise Polyesterpolyole aufgebaut aus Di- sowie gegebenenfalls Tri-, und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyesterpolyole verwendet werden.

Beispiele für geeignete Diole sind Ethylenglykol, Diethylenglykol, Triethylenglykol, Polyalkylenglykole wie Polyethylenglykol, weiterhin 1,2-Propandiol, 1,3-Propandiol, Butandiol(1,3) Butandiol(1,4), Hexandiol(1,6) und Isomere, Neopentylglykol, wobei die drei letztgenannten Verbindungen bevorzugt sind. Als gegebenenfalls mit einzusetzende Polyole sind hier beispielsweise Trimethylolpropan, Glycerin, Erythrit, Pentaerythrit oder Trishydroxyethylisocyanurat zu nennen.

Als Dicarbonsäuren kommen beispielsweise in Frage: Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Maleinsäure, Fumarsäure, Itaconsäure, Malonsäure, Korksäure, 2-Methylbemsteinsäure sowie deren mögliche Anhydride. Für die Belange der vorliegenden Erfindung werden die Anhydride infolgedessen durch den Ausdruck "Säure" umfasst. Es können auch Monocarbonsäuren, wie Benzoesäure und Hexancarbonsäure verwendet werden, vorausgesetzt, dass die mittlere OH-Funktionalität des Polyols ≥ 2 ist. Gesättigte aliphatische oder aromatische Säuren sind bevorzugt, wie Adipinsäure, Phthalsäure, Hexahydro- und Tetrahydrophthalsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure oder Hydroxybuttersäure. Geeignete Lactone sind z.B. Caprolacton, Butyrolacton und deren Homologe.

Erfindungswesentlich ist jedoch, dass ein oder mehrere Amidgruppen-haltige Polyolkomponenten bei der Herstellung der erfindungsgemäßen Polyurethane mit verwendet werden. Geeignete Amidgruppen-haltige Polyole sind z.B. durch Umsetzung von Polyaminen mit Lactonen zugänglich. Bevorzugte Polyamine sind aliphatische Diamine wie Ethylendiamin, 1,6-Hexamethylendiamin, 2-Methyl-1,5-diaminopentan (Dytec^{®} A, DuPont/Bad Homburg), 1-Amino-3,3,5-trimethyl-5-aminomethyl-cyclohexan (Isophorondiamin), Piperazin, 1,4-Diaminocyclohexan oder die Isomeren des Bis-(4-aminocyclohexyl)-methan und deren Mischungen sowie Laromin^{®} C260 (4,4'-Diamino-3,3'-dimethyl-cyclohexylmethan, BASF AG, DE.) Geeignete Lactone sind alle im technischen Maßstab verfügbare Lactone, insbesondere ε-Caprolacton.

Bevorzugt enthalten die erfindungsgemäßen Polyurethane Umsetzungsprodukte aus Verbindungen ausgewählt aus der Gruppe 1,6-Hexamethylendiamin, 2-Methyl-1,5-diaminopentan, 1-Amino-3,3,5-trimethyl-5-aminomethyl-cyclohexan (Isophorondiamin), der Isomeren des Bis-(4-aminocyclohexyl)-methan und deren Mischungen mit ε-Caprolacton. Üblicherweise wird dabei pro Aminogruppe des Amins mindestens ein, bevorzugte 1 bis 5, besonders bevorzugt ein e-Caprolacton Molekül addiert.

Die zuletzt beschriebenen Umsetzungsprodukte von Diaminen mit ε-Caprolacton können ohne weitere Umsetzung unmittelbar als Aufbaukomponente A1) verwendet werden.

In einer weiteren bevorzugten Ausführungsform werden die Amidgruppen-haltigen Polyolkomponenten als Aufbaukomponenten bei der Polyesterbildung zur Herstellung der Komponente A1) eingesetzt.

Die Komponente A1) enthält Struktureinheiten gemäß Formel (I) mit einem Gehalt an Amidgruppen, berechnet als (CO)NH, von mindestens 7,5 Gew.-%, bevorzugt mindestens 9 Gew.-%. Die Amidgruppen-haltigen Polyole A1) haben ein zahlenmittleres Molekulargewicht Mn von 314 bis 5 000 Da, bevorzugt 398 bis 2 000 und besonders bevorzugt von 398 bis 1 250.

Als Komponente A2) einsetzbare Polyesterpolyole weisen ein zahlenmittleres Molekulargewicht Mn von 400 bis 6 000 Da, bevorzugt von 600 bis 3 000 Da, besonders bevorzugt von 1500 bis 2 200 Da auf, ihre Hydroxylzahl beträgt 20 bis 400, bevorzugt 50 bis 200 und besonders bevorzugt 80 bis 160 mg KOH/g und sie weisen eine OH-Funktionalität von 1,5 bis 3,5, bevorzugt von 1,8 bis 2,7 und besonders bevorzugt von 1,95 bis 2,5 auf.

Gut geeignete Beispiele sind die an sich bekannten Polykondensate aus Di- sowie gegebenenfalls Polyolen und Di- sowie gegebenenfalls Polycarbonsäuren oder Hydroxycarbonsäuren oder Lactonen wie sie bereits unter A1) genannt wurden.

Als Polyolkomponenten kommen auch Homo- oder Mischpolymerisate von Lactonen in Frage, die bevorzugt durch Anlagerung von Lactonen oder Lactongemischen, wie γ-Butyrolacton, ε-Caprolacton und/oder Methyl-ε-caprolacton an geeignete di- und/oder höherfunktionelle Startermoleküle, wie z.B. die vorstehend als Aufbaukomponenten für Polyesterpolyole genannten niedermolekularen, mehrwertigen Alkohole, erhalten werden.

Als Komponente A2) kommen weiterhin Hydroxylgruppen aufweisenden Polycarbonate in Frage, die z.B. durch Reaktion von Kohlensäurederivaten, z.B. Diphenylcarbonat, Dimethyl- oder Diethylcarbonat oder Phosgen mit Polyolen, bevorzugt Diolen erhältlich sind. Als derartige Diole kommen z.B. Butandiol(1,4) und Hexandiol(1,6) aber auch Lacton-modifizierte Diole in Betracht. Besonders bevorzugt als Komponente A2) sind Polycarbonatpolyole mit einer Hydroxylzahl von 20 bis 172 mg KOH/g, besonders bevorzugt von 28 bis 112 mg KOH/g und einer mittleren Funktionalität von 1,6 bis 3, bevorzugt 1,9 bis 2,3 und besonders bevorzugt von 1,95 bis 2.

Die zum Aufbau der Polyurethanharze eingesetzten niedermolekularen Polyole A3) bewirken in der Regel eine Versteifung und oder eine Verzweigung der Polymerkette und besitzen im Allgemeinen ein zahlenmittleres Molekulargewicht von 62 bis 400 Da, bevorzugt von 62 bis 200 Da. Sie können aliphatische, cycloaliphatische oder aromatische Gruppen enthalten. Genannt seien hier beispielsweise die niedermolekularen Polyole mit bis zu 20 Kohlenstoffatomen je Molekül, wie z.B. Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Hydrochinondihydroxyethylether, Bisphenol A (2,2-Bis(4-hydroxyphenyl)propan), hydriertes Bisphenol A (2,2-Bis(4-hydroxycyclohexyl)propan) sowie deren Mischungen sowie Trimethylolpropan, Glycerin oder Pentaerythrit. Auch Esterdiole wie z.B. δ-Hydroxybutyl-ε-hydroxy-capronsäureester, ω-Hydroxyhexyl-γ-hydroxybuttersäureester, Adipinsäure-(β-hydroxyethyl)ester oder Terephthalsäu-Terephthalsäurebis(β-hydroxyethyl)ester können verwendet werden.

Als Komponente A4) geeignete ionische oder potentiell ionische Verbindungen sind z.B. Dihydroxycarbonsäuren, Diaminocarbonsäuren, Dihydroxysulfonsäuren, Diaminosulfonsäuren und ihre Salze wie z.B. 2-(2-Amino-ethylamino)-ethansulfonsäure, Ethylendiamin-propyl- oder butylsulfonsäure, 1,2- oder 1,3-Propylendiamin-β-ethylsulfonsäure, 3,5-Diaminobenzoesäure, das Hydrophilierungsmittel gemäß Beispiel 1 aus der EP-A 0 916 647 und deren Alkali- und/oder Ammoniumsalze; das Addukt von Natriumbisulfit an Buten-2-diol-1,4, das propoxylierte Addukte aus 2-Butendiol und NaHSO₃ (z.B. in der DE-A 2 446 440, Seite 5-9, Formel I-III) als hydrophile Aufbaukomponenten. Bevorzugte ionische oder potentielle ionische Verbindungen A4) sind solche, die über Carboxy- und/oder Carboxylatgruppen verfügen. Bevorzugte ionische Verbindungen A4) sind Dihydroxycarbonsäuren, insbesondere α,α-Dimethylolalkansäuren, wie 2,2-Dimethylolessigsäure, 2,2-Dimethylolpropionsäure, 2,2-Dimethylolbuttersäure, 2,2-Dimethylolpentansäure oder Dihydroxybernsteinsäure. Besonders bevorzugt sind 2,2-Dimethylolpropionsäure und 2,2-Dimethylolbuttersäure.

Geeignete Polyisocyanate der Komponente A5) sind die dem Fachmann an sich bekannten aromatischen, araliphatischen, aliphatischen oder cycloaliphatischen Polyisocyanate einer Isocyanat-Funktionalität von bevorzugt ≥ 2, welche auch Iminooxadiazindion-, Isocyanurat-, Uretdion-, Urethan-, Allophanat-, Biuret-, Harnstoff-, Oxadiazintrion-, Oxazolidinon-, Acylharnstoff- und/oder Carbodiimid-Strukturen aufweisen können. Diese können einzeln oder in beliebigen Mischungen untereinander eingesetzt werden.

Beispiele geeigneter Polyisocyanate sind Hexamethylendiisocyanat (HDI), Isophorondiisocyanat (IPDI), 2,2,4 und/oder 2,4,4-Trimethylhexamethylendiisocyanat, die isomeren Dicyclohexylmethan-4,4'-diisocynate oder deren Mischungen, 4-Isocyanatomethyl-1,8-octandiisocyanat und 1,4-Cyclohexyldiisocyanat, 1,4-Phenylendiisocyanat, 2,4- und/oder 2,6-Toluylendiisocyanat, die Isomeren des Diphenylmethandiisocyanates (MDI) oder Derivate basierend auf den vorstehend genannten Diisocyanaten mit Uretdion-, Isocyanurat-, Urethan-, Allophanat-, Biuret-, Iminooxadiazindion- und/oder Oxadiazintrionstruktur mit mehr als 2 Isocyanat-Gruppen.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen. Besonders bevorzugt sind Hexamethylendiisocyanat, Isophorondiisocyanat, die Isomeren des Dicyclohexylmethan-4,4'-diisocyanats sowie deren Mischungen.

Die Herstellung der erfindungsgemäßen, wasserverdünnbaren Polyurethane erfolgt nach prinzipiell bekannten Verfahren. Sie können z.B. so hergestellt werden, dass zunächst ein Isocyanatfunktionelles Präpolymer aus Komponente A5) und einer oder mehreren Verbindungen der Komponenten A1) bis A4) hergestellt wird und in einem zweiten Reaktionsschritt durch Reaktion mit einer der Verbindungen A1) bis A4), bevorzugt A3) und A4), in nicht-wässrigem Medium ein OHfunktionelles Polyurethan erhalten wird. Die Herstellung kann aber auch so erfolgen, dass das OH-Gruppen enthaltende Polyurethanharz direkt durch Umsetzung der Komponenten A1) bis A5) in entsprechendem Molverhältnis in nicht-wässrigem Medium gebildet wird, wie z.B in der EP-A 0 427 028, S.4, Z. 54 - S. 5, Z.1, beschrieben.

Die Urethanisierungsreaktion bzw. die Prepolymer-Herstellung wird normalerweise bei Temperaturen von 30° bis 140°C, je nach Reaktivität des eingesetzten Isocyanats, durchgeführt. Zur Beschleunigung der Urethanisierungsreaktion können geeignete Katalysatoren, wie sie zur Beschleunigung der NCO-OH-Reaktion dem Fachmann bekannt sind, eingesetzt werden. Beispiele sind tert. Amine wie z.B. Triethylamin, Organozinnverbindungen wie z.B. Dibutylzinnoxid, Dibutylzinndilaurat oder Zinn-bis(2-ethylhexanoat) oder andere metallorganische Verbindungen.

Die Urethanisierungsreaktion kann auch in Gegenwart von gegenüber Isocyanaten inaktiven Lösemitteln durchgeführt. Hierfür kommen insbesondere solche Lösemittel in Betracht, die mit Wasser verträglich sind, wie beispielsweise Ether, Ketone und Ester sowie N-Methyl- oder N-Ethylpyrrolidon. Die Menge dieses Lösungsmittels überschreitet zweckmäßigerweise nicht 30 Gew.-% und liegt bevorzugt ≤ 25 Gew.-%, besonders bevorzugt ≤ 10 Gew.-%, jeweils bezogen auf die Summe aus Polyurethanharz und Lösemittel. Dabei kann das Polyisocyanat der Lösung der übrigen Komponenten zugegeben werden.

Die im Polyurethanharz via Komponente A4) eingebauten Säuregruppen können zumindest anteilig neutralisiert werden. Zur Neutralisation sind insbesondere tertiäre Amine geeignet, z.B. Trialkylamine mit 1 bis 12, bevorzugt 1 bis 6 Kohlenstoff-Atomen in jedem Alkylrest. Beispiele hierfür sind Trimethylamin, Triethylamin, Methyldiethylamin, Tripropylamin und Diisopropylethylamin. Die Alkylreste können beispielsweise auch Hydroxylgruppen tragen, wie z.B. Dialkylmonoalkanol-, Alkyldialkanol- und Trialkanolamin. Beispiel hierfür ist Dimethylethanolamin, das bevorzugt als Neutralisationsmittel dient. Als Neutralisationsmittel sind gegebenenfalls auch anorganische Basen, wie Ammoniak oder Natrium- bzw. Kaliumhydroxid einsetzbar. Das Neutralisationsmittel wird zumeist im Molverhältnis zu den Säuregruppen des Präpolymers von 0,3:1 bis 1,6:1, bevorzugt von 0,5:1 bis 1,3:1 eingesetzt.

Die Neutralisation der COOH-Gruppen kann vor, während oder im Anschluss an die Urethanisierungsreaktion erfolgen. Bevorzugt wird der Neutralisationsschritt im Anschluss an die Urethanisierungsreaktion durchgeführt, in der Regel zwischen Raumtemperatur und 120°C, bevorzugt 60 bis 100°C. Es ist auch möglich, das wasserverdünnbare Polyurethanharz in nichtneutralisierter Form zur Verfügung zu stellen und die Neutralisation erst bei der Herstellung des wässrigen Beschichtungsmittels, z.B. bei Einarbeiten der erfindungsgemäßen wasserverdünnbaren Polyurethane in die im wesentlichen OH-Gruppen-freie(n) Polyurethan-Dispersion(en) durchzuführen.

Die erfindungsgemäßen wasserverdünnbaren Polyurethanharze besitzen im Allgemeinen ein zahlenmittleres Molekulargewicht Mₙ von 1 000 bis 30 000 Dₐ, bevorzugt von 1 500 bis 10 000 Dₐ, eine Säurezahl von 10 bis 80, bevorzugt von 15 bis 40 und eine OH-Zahl von 15 bis 165 mg KOH/g, bevorzugt von 30 bis 125 mg KOH/g.

Die erfindungsgemäßen Polyurethan-Harze können sowohl als wässrige Dispersionen wie auch als wasserverdünnbare organische Lösungen verwendet werden. Im letzteren Falle beträgt der Festkörpergehalt der wasserverdünnbaren Polyurethane 50 bis 90 Gew.-%, bevorzugt 70 bis 90 Gew.-% und besonders bevorzugt 75 bis 90 Gew.-%. Der zu 100 Gew.-% fehlende Rest besteht aus organischen Lösemitteln der oben genannten Art sowie den gegebenenfalls lacküblichen Hilfs- und Zusatzstoffen.

Gegenstand der vorliegenden Erfindung sind somit organische Lösungen enthaltend die erfindungsgemäßen wasserverdünnbare, hydroxyfunktionelle Polyurethane, die einen Festkörpergehalt der wasserverdünnbaren Polyurethane von 50 bis 90 Gew.-% aufweisen und der zu 100 Gew.-% fehlende Rest aus organischen Lösemitteln sowie den gegebenenfalls lacküblichen Hilfs- und Zusatzstoffen besteht.

Sind die erfindungsgemäßen Polyurethan-Harze als wässrige Dispersionen erwünscht, so können diese nach zumindest anteiliger Neutralisation der Carbonsäuregruppen mit den oben genannten Neutralisationsmittel leicht durch Zugabe von oder Eintrag in Wasser in stabile, wässrige Dispersionen überführt werden. Die wässrigen Dispersionen haben einen Festkörper von 35 bis 70 Gew.-%, bevorzugt von 40 bis 65 Gew.-%, besonders bevorzugt von 50 bis 60 Gew.-%.

Gegenstand der vorliegenden Erfindung sind ebenfalls Dispersionen enthaltend die erfindungsgemäßen, wasserverdünnbaren, hydroxyfunktionellen Polyurethane, die einen Festkörpergehalt der wasserverdünnbaren Polyurethane von 35 bis 70 Gew.-% aufweisen und der zu 100 Gew.-% fehlende Rest aus Wasser, gegebenenfalls organische Lösemittel sowie gegebenenfalls lacküblichen Hilfs- und Zusatzstoffen besteht.

Die erfindungsgemäßen, wasserverdünnbaren Polyurethane können zu wässrigen Beschichtungsmitteln verarbeitet werden. Daher sind wässrige Beschichtungsmittel, enthaltend die erfindungsgemäßen Polyurethanharze sowie mindestens einen Vernetzer bevorzugt einen Polyisocyanat-Vemetzer, besonders bevorzugt einen Polyisocyanat-Vernetzer mit freien Isocyanat-Gruppen ebenfalls Gegenstand der vorliegenden Erfindung.

Geeignete Vernetzer sind beispielsweise Polyisocyanat-Vernetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze oder Anilinharze.

Bevorzugt werden als Vernetzer Polyisocyanate mit freien und/oder blockierten Isocyanat-Gruppen eingesetzt. Bevorzugt sind solche Vernetzerharze mit unblockierten Isocyanat-Gruppen, beispielsweise auf Basis von Isophorondiisocyanat, Hexamethylendiisocyanat oder Bis-(4-isocyanatocyclohexan)-methan oder deren Mischungen sowie mit mit Uretdion-, Isocyanurat-, Urethan-, Allophanat-, Biuret-, Carbodiimid-, Iminooxadiazindion- und/oder Oxadiazintrionstrukturen modifizierte Vernetzerharze der oben genannten Polyisocyanate.

Besonders bevorzugt ist der Einsatz niedrigviskoser, gegebenenfalls hydrophil modifizierter Polyisocyanate der vorstehend genannten Art. Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985 (S. 3, Z. 55 bis S. 4, Z. 5) beschrieben. Gut geeignet sind auch die in der EP-A 959 087 (S. 3, Z. 39 bis 51) beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21 (S. 2, Z. 66 bis S. 3, Z. 5) beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE-A 100 24 624 (S. 3, Z. 13 bis 33) offenbart sind.

Diese Polyisocyanate weisen bei 23°C im Allgemeinen eine Viskosität von 200 bis 15000 mPas, bevorzugt 500 bis 7500 mPas auf. Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken. Auch Triisocyanatononan kann allein oder in Mischungen als Vernetzerkomponente eingesetzt werden.

Die so erhaltenen wässrigen Beschichtungsmittel, enthaltend die erfindungsgemäßen Polyurethane, eignen sich für alle Einsatzgebiete, in denen wässrige Anstrich- und Beschichtungssysteme mit hohen Anforderungen an die Oberflächengüte und Beständigkeit der Filme Verwendung finden, z.B. Beschichtung mineralischer Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie Hochglanzlacke. Insbesondere sind sie aber zur Erzeugung von Softfeel-Effektlacken, die gute Lösemittelbeständigkeit und insbesondere gute Beständigkeit gegen Sonnenmilch (Suntan-Lotion-Test) gewährleisten, geeignet. Bevorzugt werden solche Beschichtungsmittel in der Kunststofflackierung oder der Holzlackierung eingesetzt, wobei die Aushärtung üblicherweise bei Temperaturen zwischen Raumtemperatur und 130°C erfolgt.

Die wässrigen Beschichtungsmittel, enthaltend die erfindungsgemäßen wasserverdünnbaren Polyurethane, werden üblicherweise in Einschichtlacken oder in der Klar- oder Decklackschicht (oberste Schicht) von Mehrschichtaufbauten eingesetzt.

Die Herstellung der Beschichtung kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die Lacke und Beschichtungsmittel, enthaltend die erfindungsgemäßen Bindemitteldispersionen, können jedoch auch nach anderen Methoden, beispielsweise durch Streichen, Rollen oder Rakeln appliziert werden.

### Beispiele

Soweit nicht abweichend angegeben beziehen sich alle Prozentangaben auf Gewichtsprozent.

Viskositätsmessungen wurden mit einem Kegel-Platte-Viskosimeter Paar-Physica MRC 51, (Fa. Anton Paar, Stuttgart , Deutschland) nach DIN 53019 bei einem Schergefälle von 40 s⁻¹ durchgeführt.

Die Bestimmung der mittleren Teilchengröße erfolgte mittels Laser-Korrelations-Spektroskopie (Zetasizer^{®} 1000, Malvern Instruments, Herrenberg, Deutschland).

Hydroxylzahl (OH-Z): Einheit mg KOH/g; Bestimmungsmethode nach DIN 53240.

Säurezahl (S-Z): Einheit mg KOH/g; Bestimmungsmethode nach DIN ISO 3682.

### Rohstoffe:

**Acematt^{®} OK 412:** Mattierungsmittel (Degussa, Frankfurt)
**Aquacer^{®} 535:** Wachsemulsion (Byk Chemie, Wesel)
**Bayblend^{®} T65:** amorpher, thermoplastischer Polymerblend auf Basis von Polycarbonat (PC) und Acrylnitrilbutadienstyrol (ABS) (Bayer MaterialScience, Leverkusen)
**Bayferrox^{®} 318 M:** Pigment (Lanxess AG, Leverkusen)
**Bayhydrol^{®}** PR 650: 50%ige wässrige, aliphatische Polyurethanharz-Dispersion (BayerMaterialScience, Leverkusen)
**Bayhydrol^{®} PT 355:** 55%ige wässrige, aliphatische, hydroxyfunktionelle PolyesterPolyurethan-Dispersion, OH-Gehalt 1,5% auf Feststoff (BayerMaterialScience, Leverkusen)
**Bayhydur^{®} 3100:** hydrophil modifiziertes, aliphatisches Polyisocyanat (Bayer MaterialScience, Leverkusen)
**Byk^{®}** 348: Benetzungsmittel (Byk Chemie, Wesel)
**Desmophen^{®} C1200:** linearer, aliphatischer Polycarbonat-Polyester, OH-Z = 56 (Bayer MaterialScience, Leverkusen)
**Desmorapid^{®} SO:** Urethanisierungs-Katalysator (Bayer MaterialScience, Leverkusen)
**Entschäumer DNE**: Entschäumer (K. Obermayer, Bad Berleburg)
**PACM^{®} 20:** Isomerengemisch des Bis-(4-aminocyclohexyl)-methans (DuPont, Bad Homburg)
**Pergopak^{®} M3:** Füllstoff-Mattierungsmittel (Martinswerk, Bergheim)
**Silitin^{®} Z 86:** Füllstoff (Hoffmann & Söhne, Neuburg)
**Talkum IT Extra:** Füllstoff (Norwegian Talc, Frankfurt)
**Tego^{®} Wet KL 245:** Benetzungsmittel (50 %ig in Wasser; Tego Chemie, Essen)

### Beispiel 1: Amidgruppen-haltiges Diol

In ein 5 L Reaktionsgefäß mit Rührer, Heizmantel, Thermometer, Destillationskolonne und Stickstoffeinlass wurden 460 g ε-Caprolacton eingewogen und unter einem Stickstoffstrom von 10 - 12 L/h auf 140°C aufgeheizt. Anschließend wurden 420 g PACM^{®} 20 so zugetropft, dass die Temperatur 160°C nicht überschritt. Es wurde bei 140°C 4 Stunden nachgerührt. Nach Abkühlen auf Raumtemperatur erhielt man das Diamiddiol als klares, viskoses Harz.

### Amidgruppen-Gehalt (bezogen auf CONH): 19,6 Gew: %

### Beispiel 2: Amidgruppen-haltiges Diol

In ein 5 L Reaktionsgefäß mit Rührer, Heizmantel, Thermometer, Destillationskolonne und Stickstoffeinlass wurden 460 g ε-Caprolacton eingewogen und unter einem Stickstoffstrom von 10-12 L/h auf 140°C aufgeheizt. Anschließend wurden 340 g 1-Amino-3,3,5-trimethyl-5-aminomethyl-cyclohexan (Isophorondiamin) so zugetropft, dass die Temperatur 160°C nicht überschritt. Es wurde bei 140°C 4 Stunden nachgerührt. Nach Abkühlen auf Raumtemperatur erhielt man das Diamiddiol als klares, viskoses Harz.

### Amidgruppen-Gehalt (bezogen auf CONH): 21,5 Gew.-%

### Beispiel 3: Amidgruppen-haltiges Polyesterdiol

In ein 5 L Reaktionsgefäß mit Rührer, Heizmantel, Thermometer, Destillationskolonne und Stickstoffeinlass wurden 970 g ε-Caprolacton und 893 g PACM^{®} 20 eingewogen und unter einem Stickstoffstrom von 10 - 12 L/h bei 120°C aufgeschmolzen. Anschließend wurde der Rührer eingeschaltet und die Temperatur innerhalb von 2 Stunden auf 140°C erhöht. Die Mischung wurde unter Rühren 6 Stunden bei 140°C belassen. Anschließend wurden 252 g Phthalsäureanhydrid, 994 g Adipinsäure, 1034 g Hexandiol(1,6) und 133 g Neopentylglykol zugegeben und innerhalb von 8 Stunden auf 220°C aufgeheizt. Das Reaktionsgemisch wurde bei 220°C gehalten, bis die Säurezahl (S-Z) unter 3 gefallen war. Es resultierte ein hochviskoses, klares Polyesterharz mit einer S-Z von 2,7, einer OH-Z von 176.

### Amidgruppen-Gehalt (bezogen auf CONH): 9,1 Gew.%

### Beispiel 4: Amidgruppen-haltiges Polyesterdiol

In ein 5 L Reaktionsgefäß mit Rührer, Heizmantel, Thermometer, Destillationskolonne und Stickstoffeinlass wurden 1797 g ε-Caprolacton und 1656 g PACM^{®} 20 eingewogen und unter einem Stickstoffstrom von 10 - 12 L/h bei 120°C aufgeschmolzen. Anschließend wurde der Rührer eingeschaltet und die Temperatur innerhalb von 2 Stunden auf 140°C erhöht. Die Mischung wurde unter Rühren 6 Stunden bei 140°C belassen. Anschließend wurden 156 g Phthalsäureanhydrid, 614 g Adipinsäure, 366 g Hexandiol(1,6) und 82 g Neopentylglykol zugegeben und innerhalb von 8 Stunden auf 220°C aufgeheizt. Das Reaktionsgemisch wurde bei 220°C gehalten, bis die Säurezahl (S-Z) unter 3 gefallen war. Es resultierte ein hochviskoses, klares Polyesterharz mit einer S-Z von 2,5, einer OH-Z von 165.

### Amidgruppen-Gehalt (bezogen auf CONH): 15,0 Gew.-%

### Beispiel 5: erfindungsgemäßes Polyurethan

In einem 5 1-Reaktionsgefäß mit Kühl-, Heiz- und Rührvorrichtung wurden in einer Stickstoffatmosphäre 570 g Desmophen^{®} C1200, 585 g Amidgruppen-haltiger Polyester gemäß Beispiel 3, 60 g Dimethylolpropionsäure und 45 g Trimethylolpropan vorgelegt, auf 130°C aufgeheizt und 30 Minuten homogenisiert. Anschließend auf 80°C abgekühlt und 1,1 g Desmorapid^{®} SO und 240 g Hexamethylendiisocyanat unter kräftigen Rühren zugegeben. Unter Ausnutzung der Exothermie der Reaktion heizte sich die Mischung auf auf 140°C. Bei dieser Temperatur wurde solange gehalten, bis sich keine Isocyanat-Grüppen mehr feststellen ließen.

Anschließend wurde das so erhaltene Polyurethan auf 90° - 100°C ababgekühlt, 19 g Dimethylethanolamin zugegeben und dispergiert mit 1230 g Wasser bei Raumtemperatur. Die resultierende Dispersion hatte einen Festgehalt von 55 Gew.-% und bezogen auf Festharz eine OH-Z von 53 und eine S-Z von 18,1.

### Amidgruppen-Gehalt (bezogen auf CONH): 3,5 Gew.-%

### Beispiel 6: erfindungsgemäßes Polyurethan

In einem 5 1-Reaktionsgefäß mit Kühl-, Heiz- und Rührvorrichtung wurden in einer Stickstoffatmosphäre 1084 g Amidgruppen-haltiger Polyester gemäß Beispiel 3, 60 g Dimethylolpropionsäure und 45 g Trimethylolpropan vorgelegt, auf 130°C aufgeheizt und 30 Minuten homogenisiert. Anschließend auf 80°C abgekühlt und 1,1 g Desmorapid^{®} SO und 310 g Hexamethylendiisocyanat unter kräftigen Rühren zugegeben. Unter Ausnutzung der Exothermie der Reaktion heizte sich die Mischung auf 140°C auf. Bei dieser Temperatur wurde so lange gehalten, bis sich keine Isocyanat-Gruppen mehr feststellen ließen.

Anschließend wurde das so erhaltene Polyurethan auf 90° - 100°C abgekühlt und 19 g Dimethylethanolamin zugegeben und dispergiert mit 1045 g Wasser bei Raumtemperatur. Die resultierende Dispersion hatte einen Festgehalt von 59 Gew.-% und bezogen auf Festharz eine OH-Z von 50 und eine S-Z von 18,8.

### Amidgruppen-Gehalt (bezogen auf CONH): 6,8 Gew.-%

### Beispiel 7: erfindungsgemäßes Polyurethan

In einem 5 1-Reaktionsgefäß mit Kühl-, Heiz- und Rührvorrichtung wurden in einer Stickstoffatmosphäre 570 g Desmophen^{®} C1200, 585 g Amidgruppen-haltiger Polyester gemäß Beispiel 4, 60 g Dimethylolpropionsäure und 45 g Trimethylolpropan vorgelegt, auf 130°C aufgeheizt und 30 Minuten homogenisiert. Anschließend auf 80°C abgekühlt, und 1,1 g Desmorapid^{®} SO und 240 g Hexamethylendiisocyanat unter kräftigen Rühren zugegeben. Unter Ausnutzung der Exothermie der Reaktion heizte sich die Mischung auf 140°C auf. Bei dieser Temperatur wurde so lange gehalten, bis sich keine Isocyanat-Gruppen mehr feststellen ließen.

Anschließend wurde das so erhaltene Polyurethan auf 90° - 100°C abgekühlt, 19 g Dimethylethanolamin zugegeben und dispergiert mit 1160 g Wasser bei Raumtemperatur. Die resultierende Dispersion hatte einen Festgehalt von 55 Gew.-% und bezogen auf Festharz eine OH-Z von 46 und eine S-Z von 18,1.

### Amidgruppen-Gehalt (bezogen auf CONH): 5,9 Gew.-%

### Beispiel 8: erfindungsgemäßes Polyurethan

In einem 5 1-Reaktionsgefäß mit Kühl-, Heiz- und Rührvorrichtung wurden in einer Stickstoffatmosphäre 570 g Desmophen^{®} C1200, 585 g Amidgruppen-haltiger Diol gemäß Beispiel 1, 60 g Dimethylolpropionsäure und 45 g Trimethylolpropan vorgelegt, auf 130°C aufgeheizt und 30 Minuten homogenisiert. Anschließend wurde auf 80°C abgekühlt und 1,1 g Desmorapid^{®} SO und 240 g Hexamethylendiisocyanat unter kräftigen Rühren zugegeben. Unter Ausnutzung der Exothermie der Reaktion heizte sich die Mischung auf 140°C auf.

Bei dieser Temperatur wurde so lange gehalten, bis sich keine Isocyanat-Gruppen mehr feststellen ließen. Anschließend wurde das so erhaltene Polyurethan auf 90° - 100°C abgekühlt, 19 g Dimethylethanolamin zugegeben und dispergiert mit 1160 g Wasser bei Raumtemperatur.Die resultierende Dispersion hatte einen Festgehalt von 54 Gew.-% und bezogen auf Festharz eine OH-Z von 72,5 und eine S-Z von 18,1.

### Amidgruppen-Gehalt (bezogen auf CONH): 7,6 Gew.-%

### Anwendungsbeispiel

### Repturzusammensetzung 2K-Softfeel-Lacke

| *Beispiel* | | **9** | **10** | **11** | **12** |
|---|---|---|---|---|---|
| Beispiel 5 | Komponente 1 | 62,3 | - | - | - |
| Beispiel 6 | | - | 68,1 | - | - |
| Beispiel 7 | | - | - | 65,8 | - |
| Bayhydrol^{®} PT 355 | | - | - | - | 72,7 |
| Bayhydrol^{®} PR 650 | Komponente 2 | 80,0 | 80,0 | 80,0 | 80,0 |
| Entschäumer DNE 01 | Additive | 0,6 | 0,6 | 0,6 | 0,5 |
| Tego^{®} Wet KL 245, 50% in Wasser | | 0,9 | 0,9 | 0,9 | 0,9 |
| Byk^{®} 348 | | 1,4 | 1,4 | 1,4 | 1,4 |
| Aquacer^{®} 535 | | 4,0 | 4,0 | 4,0 | 4,0 |
| Sillitin^{®} Z 86 | | 14,0 | 13,9 | 13,9 | 13,9 |
| Talkum IT extra | | 11,2 | 11,1 | 11,1 | 11,1 |
| Bayferrox^{®} 318 | | 37,3 | 37,1 | 37,1 | 36,9 |
| Acematt^{®} OK 412 | | 7,5 | 7,4 | 7,4 | 7,4 |
| Wasser, demineralisiert | | 40,0 | 57,1 | 49,3 | 40,0 |
| Bayhydur^{®} 3100, 75%ig in MPA | Komponente 3 | 17,7 | 17,0 | 17,0 | 16,5 |

### Anreibung der Softfeel-Lacke:

Zur Lackherstellung werden die Bindemittel gemäß Tabelle 1 (Komponenten 1 und 2) mit den Additiven gemäß Tabelle 1 und demineralisiertem Wasser gemäß den Mengenangaben laut Tabelle 1 in einer Perlmühle zu einem wässrigen Mahlgut angerieben. Nach 16 h Standzeit bei Raumtemperatur werden in diesen Stammlack per Dissolver eine 75 %ige Lösung des Polyisocyanat-Vernetzers Bayhydur^{®} 3100 in Methoxypropylacetat (Komponente 3, Mengen gemäß Tabelle 1) eingearbeitet.

Der so erhaltene Lack wird auf eine ebene Fläche spritzappliziert (Trockenschichtdicke 40 µm. - 50 µm) und nach 10 Minuten Ablüftzeit bei 55% relaltiver Luftfeuchtigkeit, anschließend 30 Minuten bei 80°C und dann 16 Stunden bei 60°C getrocknet.

Es wird ein matter, gleichmäßiger Lackfilm mit ausgeprägtem Softfeel-Effekt, der sich als glattsamtig beschreiben lässt, erhalten.

### Bestimmung der Lösemittelbeständigkeit

Zur Bestimmung der Lösemittelbeständigkeiten wurden die Softfeellacke gemäß obiger Tabelle 1 auf Glas aufgetragen und wie beschrieben getrocknet. Zur Prüfung wird ein mit Lösemittel getränkter Wattebausch auf den Lack aufgelegt. Bei niedrig siedenden Lösemitteln wird der Wattebausch zusätzlich mit einem Uhrglas abgedeckt. Die Bewertung erfolgt nach 1 Minute Einwirkzeit. Anschließend wird der Wattebausch entfernt und Restlösemittel mit einem Zellstofftuch abgewischt. Die Prüffläche wird danach sofort visuell und durch Ankratzen mit dem Fingernagel abgemustert (Beurteilung s.u.)

| **Beispiel** | | Etc | MPA | Xylol | EtOH | SB | H₂O |
|---|---|---|---|---|---|---|---|
| **9** | Beispiel 5 | 2 | 0 | 0 | 1 | 1 | 0 |
| **10** | Beispiel 6 | 3 | 1 | 1 | 1 | 1 | 0 |
| **11** | Beispiel 7 3 | 3 | 1 | 1 | 0 | 1 | 0 |
| **12** | Bayhydrol^{®} PT 355 | 4 | 3 | 3 | 2 | 2 | 2 |

| | | | | | | | |
|---|---|---|---|---|---|---|---|
| EtAc=Essigsäureethylester, MPA=Methoxypropylacetat, EtOH=Ethanol, SB=Superbenzin | | | | | | | |

### Beurteilung

0 unverändert, keine Schädigung
1 Spur verändert (Quellungsring ist sehr schwach, nur durch Spiegeln im Licht zu erkennen, keine Erweichung mit dem Fingernagel feststellbar)
2 gering verändert (Quellungsring ist im Licht erkennbar, Kratzspuren des Fingernagels erkennbar)
3 deutlich verändert (geschlossener Quellungsring ist deutlich erkennbar, Kratzspuren erkennbar, mit dem Fingernagel, Erweichung feststellbar)
4 stark verändert (geschlossener Quellungsring ist sehr stark ausgeprägt, mit dem Fingernagel bis zum Untergrund durchkratzbar, klebrig)
5 zerstört (Lackoberfläche abgelöst/zerstört)

Die Lacke gemäß den Beispielen 9 bis 11, welche die Amidgruppen-haltige Polyurethan-Harze enthalten zeichnen sich durch eine wesentlich bessere Lösemittelbeständigkeit als der Standard (Beispiel 12) aus.

### Bestimmung der Creme-Beständigkeit

Zur Bestimmung der Lösemittelbeständigkeiten wurden die Softfeellacke gemäß Tabelle 1 auf Bayblend^{®} T65-Prüfplatten aufgetragen und wie beschrieben getrocknet.

Jeweil ca. 1 ml der Prüfmedien (Coppertone Waterbabies SPF30 wasserfest, Hersteller Schering-Plough HealthCare Products Inc.; Delial Plus Vitamin SF30 wasserfest, Hersteller: L'Oréal Deutschland GmbH, 40474 Düsseldorf; Kamill Classic Hand & Nagel Creme, Hersteller: Burnus GmbH, 40474 Düsseldorf) wurden in einem Metallring von 2 cm Durchmesser auf den Softfeel-Lack aufgetragen. Nach 1 Stunde Einwirkzeit bei 80°C wurden die Cremes mit einem Baumwolltuch abgewischt und gemäß unten stehender Skala visuell das Schadensbild beurteilt.

**Auswertung:**

| **Beispiel** | | Coppertone Water-babies SPF30 wasserfest | Delial Plus Vitamin SF30 wasserfest | Kamill Classic Hand & Nagel Creme |
|---|---|---|---|---|
| **9** | Beispiel 5 | 3 | 3 | 3 |
| **10** | Beispiel 6 | 3 | 3 | 3 |
| **11** | Beispiel 7 | 3 | 3 | 3 |
| **12** | Bayhydrol^{®} PT 355 | 4 | 4 | 4 |

### Beurteilung:

1 - Keine Veränderung 2 - Temporäre Schädigung 3 - Fleck / Glanzverlust / Farbveränderung 4 - Erweichung 5 - Blase / Ablösung vom Untergrund 6 - aufgelöst

## Patentansprüche

1. Wasserverdürmbare, hydrpxyfunktionelle Polyurethane enthaltend Struktureinheiten gemäß Formel (I) 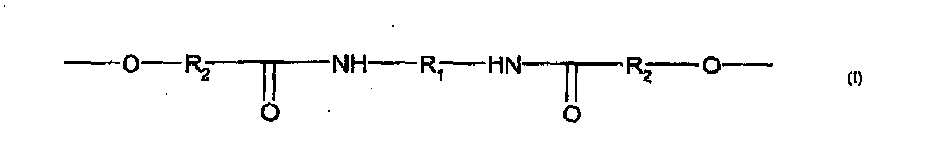 in welcher
R1 ein aliphatischer oder cycloaliphatischer Rest mit 2 bis 18 Kohlenstoffatomen-Atomen und
R2 ein aliphatischer Rest mit 3 bis 5 Kohlenstoff-Atomen ist, wobei die wasserverdünnbaren, hydroxyfunktionellen Polyurethane einen Amidgruppen-Gchalt, berechnet als (CO)NH, von 2,0 bis 20 Gew.-% aufweisen.

2. Wasserverdünnbare, hydroxyfunktionelle Polyurethane gemäß Anspruch 1, **dadurch gekennzeichnet, dass** die Polyurethane als Aufbaukomponenten
A1) 25 - 80 Gew.-% mindestens eines Amidgruppen-haltigen Polyols des Molekulargewichts Mn von 314 bis 5000 Da,
A2) 0 - 60 Gew.-% mindestens eines Polyols ausgewählt aus der Gruppe der Polyester, Polycarbonate oder Polyether des zahlenmittleren Molekulargewichts Mn von 400 bis 6000 Da,
A3) 0 - 20 Gew.-% mindestens eines niedermolekularen Polyols mit mindestens zwei Hydroxylgruppen des Molekulargewichts 62 bis 400 Da,
A4) 2 - 10 Gew.-% mindestens einer Verbindung, die mindestens zwei gegenüber Isocyanatgruppen reaktive Gruppen und mindestens eine zur Anionenbildung befähigte Gruppe aufweist und
A5) 5 - 50 Gew.-% Polyisocyanate
enthalten, wobei die Summe der Komponenten A1) bis A5) 100 % ergibt.

3. Wasserverdünnbare, hydroxyfunktionelle Polyurethane gemäß Anspruch 1, **dadurch gekennzeichnet, dass** die Komponente A1) Umsetzungsprodukte aus Verbindungen ausgewählt aus der Gruppe 1,6-Hexamethylendiamin, 2-Methyl-1,5-diaminopentan, 1-Amino-3,3,5-trimethyl-5-aminomethyl-cyclohexan (Isophorondiamin) der Isomeren des Bis-(4-aminocyclohexyl)-methan und deren Mischungen mit e-Caprolacton enthält

4. Wasserverdünnbare, hydroxyfunktionelle Polyurethane gemäß Anspruch 1, **dadurch gekennzeichnet, dass** die Komponente A1) ein Amidgruppen-haltiges Polyesterpolyol ist.

5. Wasserverdünnbare, hydroxyfunktionelle Polyurethane gemäß Anspruch 1, **dadurch gekennzeichnet, dass** die Komponente A1) Struktureinheiten gemäß Formel (I) mit einem Gehalt an Amidgruppen, berechnet als (CO)NH, von mindestens 7,5 Gew.-% enthält.

6. Organische Lösungen enthaltend wasserverdünnbare, hydoxyfunktionelle Polyurethane gemäß Anspruch 1, **dadurch gekennzeichnet, dass** diese einen Festkörpergehalt der wasserverdünnbaren Polyurethane von 50 bis 90 Gew.-% aufweisen und der zu 100 Gew.-% fehlende Rest aus organischen Lösemitteln sowie den gegebenenfalls lacküblichen Hilfs- und Zusatzstoffen besteht.

7. Dispersionen enthaltend wasserverdünnbare, hydroxynnktionelle Polyurethane gemäß Anspruch 1, **dadurch gekennzeichnet, dass** diese einen Festkörpergehalt der wasserverdünnbaren Polyurethane von 35 bis 70 Gew.-% aufweisen und der zu 100 Gew.-% fehlende Rest aus Wasser, gegebenenfalls organischen. Lösemitteln sowie gegebenenfalls lacküblichen Hilfs- und Zusatzstoffen besteht.

8. Wässriges Beschichtungsmittel, enthaltend Dispersionen gemäß Anspruch 7 sowie mindestens einen Vernetzer.

9. Wässriges Beschichtungsmittel gemäß Anspruch 8, **dadurch gekennzeichnet, dass** der Vernetzer ein Polyisocyanat ist.

10. Wässriges Beschichtungsmittel gemäß Anspruch 9, **dadurch gekennzeichnet, dass** das Polyisocyanat in unblockierter Form vorliegt.

11. Verwendung der wasserverdünnbaren, hydroxyfunktionellen Polyurethane gemäß Anspruch 1 zur Lackierung von Kunstoff- oder Holzsubstrate.

12. Verwendung der wasserverdünnbaren, hydroxyfunktionellen Polyurethane gemäß Anspruch 1 zur Herstellung von softfeel-Lacken.

13. Mehrschichtenaufbau mit einem Klar- oder Decklack, enthaltend wasserverdünnbare, hydroxyfucktionelle Polyurethane gemäß Anspruch 1, als oberste Deckschicht.

## Claims

1. Water-dilutable, hydroxy-functional polyurethanes comprising structural units of the formula (I) 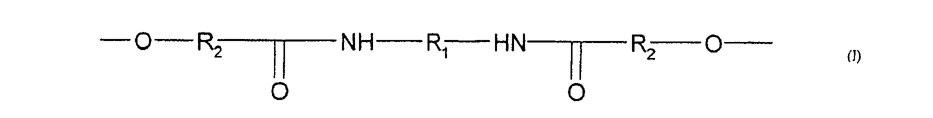 in which
R1 is an aliphatic or cycloaliphatic radical having 2 to 18 carbon atoms and
R2 is an aliphatic radical having 3 to 5 carbon atoms, the water-dilutable, hydroxy-functional polyurethanes having an amide group content, calculated as (CO)NH, of 2.0% to 20% by weight.

2. Water-dilutable, hydroxy-functional polyurethanes according to Claim 1, **characterized in that** the polyurethanes contain as synthesis components
A1) 25% - 80% by weight of at least one polyol containing amide groups, with a molecular weight Mn of 314 to 5000 Da,
A2) 0% - 60% by weight of at least one polyol selected from the group of polyesters, polycarbonates or polyethers, with a number-average molecular weight Mn of 400 to 6000 Da,
A3) 0% - 20% by weight of at least one low molecular weight polyol having at least two hydroxyl groups, with a molecular weight of 62 to 400 Da,
A4) 2% - 10% by weight of at least one compound which has at least two groups that are reactive towards isocyanate groups, and at least one group that is capable of forming anions, and
A5) 5% - 50% by weight of polyisocyanates,
the sum of components A1) to A5) making 100%.

3. Water-dilutable, hydroxy-functional polyurethanes according to Claim 1, **characterized in that** component A1) comprises reaction products of compounds selected from the group consisting of 1,6-hexamethylenediamine, 2-methyl-1,5-diaminopentane, 1-amino-3,3,5-trimethyl-5-aminomethylcyclohexane (isophoronediamine), the isomers of bis(4-aminocyclohexyl)methane, and mixtures thereof, with ε-caprolactone.

4. Water-dilutable, hydroxy-functional polyurethanes according to Claim 1, **characterized in that** component A1) is a polyester polyol containing amide groups.

5. Water-dilutable, hydroxy-functional polyurethanes according to Claim 1, **characterized in that** the component A1) comprises structural units of formula (I) having an amide group content, calculated as (CO)NH, of at least 7.5% by weight.

6. Organic solutions comprising water-dilutable, hydroxy-functional polyurethanes according to Claim 1, **characterized in that** their water-dilutable polyurethane solids content is from 50% to 90% by weight and the remainder to 100% by weight consists of organic solvents and of the auxiliaries and additives that, where appropriate, are typical of coating materials.

7. Dispersions comprising water-dilutable, hydroxy-functional polyurethanes according to Claim 1, **characterized in that** their water-dilutable polyurethane solids content is from 35% to 70% by weight and the remainder to 100% by weight consists of water, organic solvents where appropriate, and also, where appropriate, auxiliaries and additives typical of coating materials.

8. Aqueous coating composition comprising dispersions according to Claim 7 and also at least one crosslinker.

9. Aqueous coating composition according to Claim 8, **characterized in that** the crosslinker is a polyisocyanate.

10. Aqueous coating composition according to Claim 9, **characterized in that** the polyisocyanate is in non-blocked form.

11. Use of the water-dilutable, hydroxy-functional polyurethanes according to Claim 1 for coating substrates of plastic or of wood.

12. Use of the water-dilutable, hydroxy-functional polyurethanes according to Claim 1 for preparing soft feel coating materials.

13. Multi-coat construction with a clearcoat or topcoat material, comprising water-dilutable, hydroxy-functional polyurethanes according to Claim 1 as topmost top coat.

## Revendications

1. Polyuréthanes à fonctionnalité hydroxy, diluables à l'eau, contenant des unités de structure selon la formule (I) 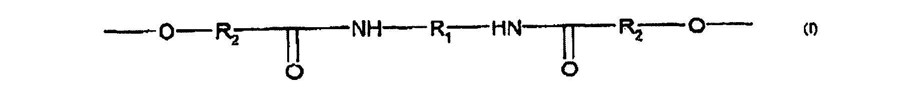 dans laquelle
R₁ représente un radical aliphatique ou cycloaliphatique comprenant 2 à 18 atomes de carbone et
R₂ représente un radical aliphatique comprenant 3 à 5 atomes de carbone, où les polyuréthanes à fonctionnalité hydroxy, diluables à l'eau, présentent une teneur en groupes amide, calculée sous forme de (CO)NH, de 2,0 à 20% en poids.

2. Polyuréthanes à fonctionnalité hydroxy, diluables à l'eau selon la revendication 1, **caractérisés en ce que** les polyuréthanes contiennent, comme composants constitutifs
A1) 25-80% en poids d'au moins un polyol contenant des groupes amide présentant le poids moléculaire Mn de 314 à 5000 Da ;
A2) 0-60% en poids d'au moins un polyol choisi dans le groupe des polyesters, polycarbonates ou polyéthers présentant un poids moléculaire numérique moyen Mₙ de 400 à 6000 Da,
A3) 0-20% en poids d'au moins un polyol de bas poids moléculaire présentant au moins deux groupes hydroxyle présentant un poids moléculaire de 62 à 400 Da,
A4) 2-10% en poids d'au moins un composé qui présente au moins deux groupes réactifs par rapport aux groupes isocyanate et au moins un groupe apte à la formation d'anions et
A5) 5-50% en poids de polyisocyanates
la somme des composants A1) à A5) valant 100%.

3. Polyuréthanes à fonctionnalité hydroxy, diluables à l'eau selon la revendication 1, **caractérisés en ce que** le composant A1) contient des produits de transformation de composés choisis dans le groupe formé par la 1,6-hexaméthylènediamine, le 2-méthyl-1,5-diaminopentane, le 1-amino-3,3,5-triméthyl-5-aminométhylcyclohexane (isophoronediamine), les isomères de bis-(4-aminocyclohexyl)-méthane et leurs mélanges avec de l'ε-caprolactone.

4. Polyuréthanes à fonctionnalité hydroxy, diluables à l'eau selon la revendication 1, **caractérisés en ce que** le composant A1) est un polyesterpolyol contenant des groupes amide.

5. Polyuréthanes à fonctionnalité hydroxy, diluables à l'eau selon la revendication 1, **caractérisés en ce que** le composant A1) contient des unités de structure selon la formule (I) présentant une teneur en groupes amide, calculée sous forme de (CO)NH, d'au moins 7,5% en poids.

6. Solutions organiques contenant des polyuréthanes à fonctionnalité hydroxy, diluables à l'eau selon la revendication 1, **caractérisées en ce qu'**elles présentent une teneur en solides des polyuréthanes diluables dans l'eau de 50 à 90% en poids et la partie manquante par rapport à 100% en poids est constituée par des solvants organiques ainsi que le cas échéant les adjuvants et additifs usuels pour les laques.

7. Dispersions contenant des polyuréthanes à fonctionnalité hydroxy, diluables à l'eau selon la revendication 1, **caractérisées en ce qu'**elles présentent une teneur en solides des polyuréthanes diluables dans l'eau de 35 à 70% en poids et la partie manquante par rapport à 100% en poids est constituée par de l'eau, le cas échéant des solvants organiques ainsi que le cas échéant les adjuvants et additifs usuels pour les laques.

8. Agent de revêtement aqueux, contenant des dispersions aqueuses selon la revendication 7 ainsi qu'au moins un réticulant.

9. Agent de revêtement aqueux selon la revendication 8, **caractérisé en ce que** le réticulant est un polyisocyanate.

10. Agent de revêtement aqueux selon la revendication 9, **caractérisé en ce que** le polyisocyanate se trouve sous forme non bloquée.

11. Utilisation des polyuréthanes à fonctionnalité hydroxy, diluables à l'eau selon la revendication 1 pour le laquage de substrats en matériau synthétique ou en bois.

12. Utilisation des polyuréthanes à fonctionnalité hydroxy, diluables à l'eau selon la revendication 1 pour la préparation de laques à toucher doux.

13. Construction à plusieurs couches, avec une laque claire ou de recouvrement, contenant des polyuréthanes à fonctionnalité hydroxy, diluables à l'eau selon la revendication 1 comme couche de recouvrement supérieure.
